# EUROPÄISCHE PATENTSCHRIFT

(11) **EP 0 767 749 B1**
(45) Veröffentlichungstag und Bekanntmachung des Hinweises auf die Patenterteilung: **27.01.1999**
(21) Anmeldenummer: 95924166.2
(22) Anmeldetag: 29.06.1995
(51) Int. Cl.: B62D 27/02

(54) **KAROSSERIEVERBUNDTEIL UND VERFAHREN ZU SEINER HERSTELLUNG**
COMPOSITE CAR BODY PART AND PROCESS FOR MANUFACTURING THE SAME
PIECE COMPOSITE POUR CAROSSERIES ET SON PROCEDE DE FABRICATION

(30) Priorität: 30.06.1994 DE 4422839
(43) Veröffentlichungstag der Anmeldung: 16.04.1997
(73) Patentinhaber: RHENANIA CHEMISCHE GESELLSCHAFT MIT BESCHRÄNKTER HAFTUNG, 41516 Grevenbroich (DE)
(72) Erfinder: CZARNOWSKI, Peter, D-47906 Kempen (DE); SCHNEIDER, Helmuth, D-54531 Manderscheid (DE); HEYDT, Willibert, D-41569 Rommerskirchen (DE)
(74) Vertreter: KOHLER SCHMID + PARTNER
(86) Internationale Anmeldenummer: DE9500859
(87) Internationale Veröffentlichungsnummer: WO9600675

(56) Entgegenhaltungen:
- EP-A- 0 064 677
- DE-C- 4 036 586
- FR-A- 1 021 609
- GB-A- 2 182 996
- US-A- 3 052 021
- US-A- 4 687 587
- US-A- 4 969 251
- PATENT ABSTRACTS OF JAPAN vol. 012 no. 186 (C-500) ,31.Mai 1988 & JP,A,62 292875 (TOYOTA AUTO BODY CO LTD) 19.Dezember 1987,
- PATENT ABSTRACTS OF JAPAN vol. 008 no. 100 (M-295) ,11.Mai 1984 & JP,A,59 014575 (NISSAN JIDOSHA KK;OTHERS: 01) 25.Januar 1984,

## Beschreibung

Die Erfindung betrifft ein Karosserieverbundteil, bestehend aus einem Metallblech, einer Karosseriekomponente sowie einer aus einem Schmeltkleber bestehenden und au den Kontaktflächen zu der Karosseriekomponente und zu dem Metallblech lin verklebten oder verschweißten Kunststoffschicht. Die Erfindung betrifft aüßerdem ein Verfahren zur Herstellung des Karosserieverbundteiles.

Das Kleben von Alumimium und anderen Metallen unter Verwendung einer dünnen Klebstoffschicht ist seit langem bekannt. Da die Klebstoffe auf den Oberflächen haften müssen, kommt der Vorbehandlung und dem Oberflächenzustand vor der eigentlichen Verklebung eine entscheidende Bedeutung zu. Dies ist insbesondere bei Walzhalbzeugen, wie z.B. Bandmaterial, zu beachten, da hier häufig beölte bzw. verschmutzte Oberflächen vorliegen, die beim Klebeprozeß Schwierigkeiten verursachen.

Die hohe Sauerstoffaffinität des Aluminiums führe dazu, daß sich je nach den Umgebungsbedingungen eine natürliche Oxidschicht bildet, die durch die üblichen Vorbehandlungsmaßnahmen bei großflächigen Teilen nur unzureichend beseitigt werden kann. Auch frisch angeschliffenes Aluminium überzieht sich an Luft sofort mit einer Oxidschicht, die bei Raumtemperatur in wenigen Minuten eine Dicke in der Größenordnung von einigen µm erreicht. Der an feuchter Luft gebildete natürliche Oxidfilm besteht aus zwei übereinanderliegenden Teilschichten: der nahezu porenfreien Grund- oder Sperrschicht aus amorphem Aluminiumoxid und einer Grund- oder Sperrschicht aus amorphem Aluminiumoxid und einer porösen, wasserhaltigen Deckschicht mit geringen kristallinen Anteilen.

Aufgrund dieses heterogenen Aufbaus sind die auf Aluminium oder anderen Metallwerkstoffen aufgebrachten Lackschichten nur nach sorgfältiger Vorbehandlung der Metalloberfläche ausreichend gegen Korrosionsangriff geschützt. Bei mechanischen Beanspruchungen kommt es leicht zum Abplatzen der Oxid- oder Lackschicht und danach zu einem Angriff des Grundmetalls.

Deshalb kann mit genügender Festigkeit und Sicherheit vor korosiver Unterwanderung nur auf einer vorbehandelten Oberfläche geklebt werden.

Im Karosseriebau hat es sich als sinnvoll erwiesen, daß Karosserieverbundteile vor der eigentlichen Verklebung durch zusätzliche Punktschweißverindungen fixiert werden. So ist im Aluminium-Taschenbuch 14. Auflage, Seite 595 ff das Punktschweißkleben erwähnt, mit dem eine Verbesserung der Korrosionsbeständigkeit aber auch der Dauerfestigkeit von punktgeschweißten Bauteilen erreicht wird. Als Vorbehandlungsmaßnahme werden eine Ätz- oder Chromatbehandlung empfohlen (Tafel 10.28: Einstelldaten beim Punktschweißkleben).

Andererseits sind Verfahren zur Behandlung von beim Bau von Fahrzeugen zum Einsatz kommenden Aluminiumblechen bekannt, wobei vor dem Umformprozeß eine erste Schutzschicht, insbesondere eine Silikatschicht mit sechswertigen Chromaten und auf diese eine für den Umformprozeß förderliche Zweitschicht aufgebracht werden. Nach DE-PS 40 36 586 (BMW) soll die Zweitschicht elektrisch leitfähig sein, um die nachfolgende kathodische Tauchlackierung zu ermöglichen.

Die bekannten Verfahren weisen verschiedene Nachteile auf, da einerseits bei den reinen Klebverbindungen die erzielbaren Festigkeiten wegen inhomogener Zustände in der Kontaktfläche unzureichend sind und andererseits bei den mechanischen Fügeverfahren keine ausreichend dekorativen Oberflächen erzielt werden können. Durch die zunehmende Verwendung im Automobilbau werden jedoch höhere Anforderungen an die sichtbaren Oberflächen, Bauteilsteifigkeiten, aber auch an die Wandstärkenreduzierung zur Gewichtserleichterung der Karosserieteile gestellt.

Ferner wird die industrielle Umsetzung der Klebetechnologie infolge der langen Behandlungszeiten bei der Oberflächenvorbereitung und während des Klebeprozesses erschwert. Die langen Behandlungszeiten werden beim Klebeprozeß unter anderem dadurch verursacht, daß die üblichen Klebematerialien für längere Zeit viskos diskus bleiben und erst nach einer gewissen Zeit gelatieren. Bis zum Eintritt des Gelatierens müssen die zu verbindenden Teile derart gehalten werden, daß der flüssige Klebstoff nicht aus der Klebefuge ausläuft.

Auch ist ein definiertes Auftragen von reproduzierbaren Klebermengen bisher nicht möglich, da es insbesondere in den Ecken von Aluminiumbauteilen starke Schwankungen in der Auftragsmenge gibt Diese Maßnahmen müssen bisher vor Ort in der Endfertigung durchgeführt werden, wobei sich die Viskosität und damit das Auftragsverhalten des Klebers bei den dort einwirkenden Temperaturschwankungen ständig ändert Daher muß auch die Klebermenge durch Einstellung der Düsengeschwindigkeit und Ausflußrate konstant gehlaten werden.

Ein weiterer Nachteil bei dem bekannten Verfahren ist die lange Trockenzeit aufgrund des Abbindens der Klebstoffe und einer gegebenenfalls erforderlichen Nachpreßkraft, die beispielsweise bei EP-Klebstoffen mit und ohne Füllstoff erforderlich sind.

Aufgabe der vorliegenden Erfindung ist es, ein Karosserieverbundteil der eingangs genannten Art mit verbesserten Haftungseigenschaften, Umformeigenschaften sowie einer verbesserten Elastizität in einem für die Großserie geeigneten Verfahren unter reproduzierbaren Bedingungen herzustellen.

Diese Aufgabe wird erfindungsgemäß durch die in den Ansprüchen angegebenen Merkmale gelöst. Es hat sich gezeigt, daß sich durch die Verlagerung der Blechvorbehandlung des Kleberauftrages in die Beschichtungsanlage der Metallbänder ein integriertes Halbzeug herstellen läßt, das durch die nachfolgend abgestimmte Verbingungstechnik zu einem qualitativ hochwertigen korrosionsfesten Karosseriebauteil umgeformt werden kann. Bei konversionsbehandelten Bändern liegt demnach eine die Haftung beeinträchtigende Oxidschicht nicht vor. Es kann daher auf die bisher erforderlichen Maßnahmen verzichtet werden, die eine Vorbereitung vor Ort durch Bürsten, Schleifen, Beizen, Chromatieren oder Vorbeschichten in räumlichen und zeitlichen Abständen vorsehen wodurch ungleichmäßige Qualitäten an den Oberflächen und damit in den Verbindungszonen auftreten.

Im einzelnen sind die Verfahrensschritte nach der CoilcoatingTechnologie unmittelbar an dem Metallblech in einem integrierten Prozeß durchzuführen, wobei durch die definierte Verbehandlung und durch den unmittelbaren Kleberauftrag ein qualitativ besseres und kostengünstigares Ergebnis erzielt wird.

Zudem bietet sich mit der Erfindung in einer vorteilhaften Verfahrensvariante die Möglichkeit, die Verklebung gleichzeitig mit der KTL-Einbrennlackierung zu vollziehen. Hierzu wird ein Kleber eingesetzt, der mit seinem Erweichungspunkt im Bereich der KTL-Einbrenntemperatur liegt. In Verbindung mit einer Vorfixierung durch konventionelle Fügetechniken können kurze Taktzeiten bei der Herstellung eingehalten werden.

Im folgenden wird die Erfindung anhand einzelner Beispiele näher erläutert. Es zeigen:
- Figur 1: Querschnitt durch einen erfindungsgmäß aufgebauten Karosserieverbundkörper
- Figur 2: Schematischer Verfahrensablauf zur Herstellung eines erfindungsgemäßen Karosserieverbundteiles
- Figur 3: Querschnitt durch einen erfindungsgemäß aufgebauten Karosserieverbundkörper aus einem doppelt beschichteten Metallblech
- Figur 4: Querschnitt durch einen Mehrfachvarbund aus zwei beschichteten Metallblechen

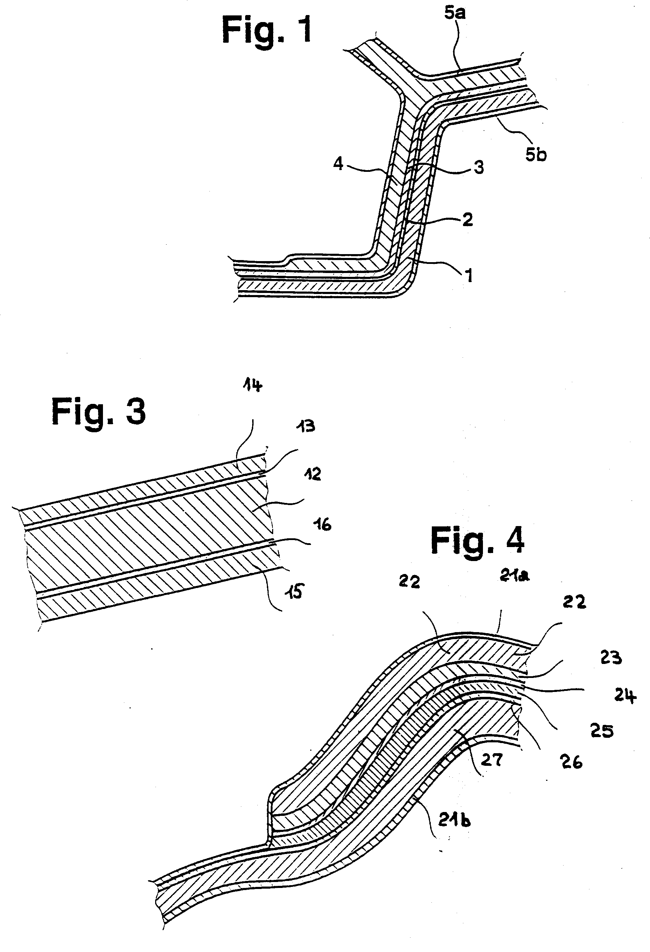

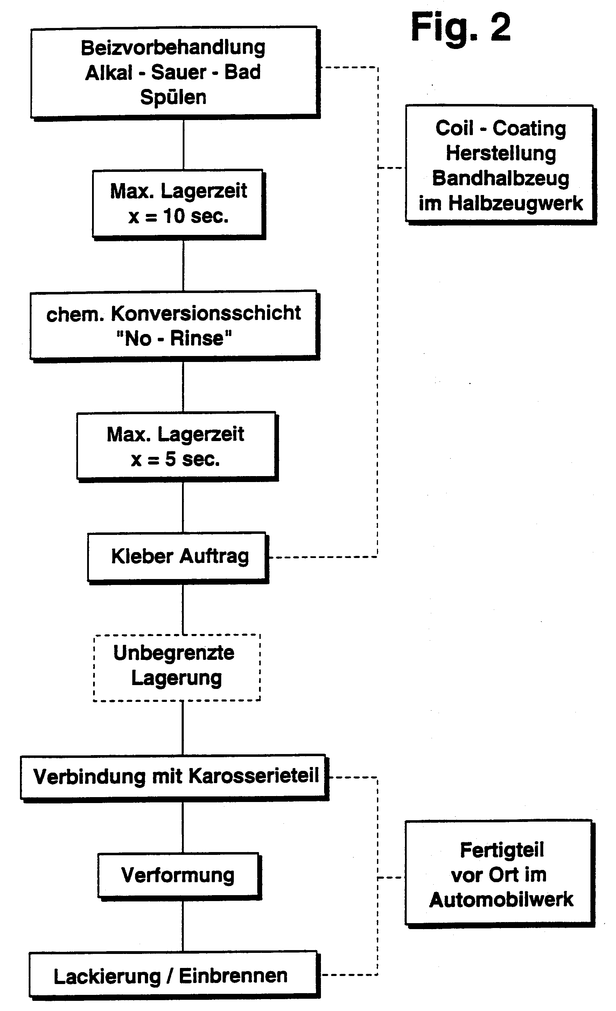

In Figur 1 ist ein Karosserieverbundteil dargestellt, bestehend aus einem Metallband 1, einer Konversionsschicht 2, einem Schmelzkleber 3, einer Karosseriekomponente 4 und einer Lackschicht 5a, 5b. Das Karosserieverbundteil in Figur 1 ist nicht maßstäblich angegeben, sondern stellt eine prinzipielle Anordnung des erfindungsgemäßen Aufbaus dar. Die einzelnen Schichtdicken lassen sich wie folgt festlegen:
- Metallband 0,2 bis 3 mm
- Konversionsschicht 0,2 bis 2 g/m²
- Schmelzkleber 5 bis 80 µm
- Dicke der Karosseriekomponente 1,2 mm

Bei der erfindungsgemäßen Konversionsschicht handelt es sich um eine chemisch erzeugte Chromatschicht, die eine besonders günstige Kapillaraktivität aufweist. Diese kann vorteilhafterweise an einer Bandlackierung unmittelbar im Anschluß an die übliche Beizbehandlung erfolgen.

Zur Verbesserung der Umformeigenschaften ist im Schmelzkleber ein Additiv mit Schmierwirkung enthalten. Somit lassen sich hohe Unformgrade von bis zu 25 % ohne Probleme mit Aluminiumbauteilen herstellen. Als bervorzugte Aluminiumlegierüng wird an AlMgSi oder AlMg gedacht, da hier die erreichbaren Festigkeiten besonders günstig sind.

Es ist grundsätzlich möglich, die Karosseriekomponente in einer Stahl-Aluminium-Mischbauweise herzustellen. Die Dicke des Metallbandes sollte vorzugsweise 0,2 bis 3 mm betragen. Dieses Metallband soll erfindungsgemäß im Coil-Coating-Verfahren mit einer chemischen Konversionsschicht versehen und unmittelbar danach mit einem Schmelzkleber beschichtet werden. Die Konversionsschicht kann innerhalb der Gesamtdicke von 5 bis 10 µm gehalten werden, wobei vorteilhafterweise ein Primer zwischen Schmelzkleber und Konversionsschicht angeordnet ist.

Im Hinblick auf eine längere Zwischenlagerung der Halbzeuge ist es günstig, einen Haftlack auf das Band aufzubringen. Hierdurch wird das Karosserieverbundteil auch unter rauhen Transportbedingungen nicht beschädigt.

Die Auswahl eines geeigneten Schmelzklebers kann auch unter dem Gesichtspunkt der Verbesserung der Korrosionsschutzeigenschaften erfolgen. Dies begünstigt ebenfalls die Eignung für eine längere Zwischenlagerung oder auch für die Verwendung im Karosseriebereich bei besonders rauhen Einsatzbedingungen.

Nach der Bandbehandlung kann das Karosserieverbundteil nach den bekannten spanlosen und spanenden Umformverfahren verformt werden. Dies kann entweder für die beschichteten Metallbleche und Karosseriekomponenten getrennt oder gleich im Verbund geschehen. Karosseriekomponenten getrennt oder gleich im Verbund geschehen.

Wenn erforderlich kann das Karosserieverbundteil vor der Verklebung durch Clinch- oder anders mechanische Fügeverfahren fixiert werden. Hierdurch erhält der Aufbau eine Vorfestigkeit, die auch im Endzustand noch von Vorteil ist.

Bei der nachfolgenden Lackierung kann es erforderlich sein, daß der schmelzkleber elektrisch leitfähige Bestandteile enthält, damit die kathodische Tauchlackierung (KTL) angewendet werden kann.

In Figur 2 ist die Reihenfolge der erfindungsgemäßen Herstellung von sphärisch geformten Karosserieverbundteilen schematisch dargestellt. Nach einer Beizvorbehandlung in einer alkalischen, sauren Badbehandlungsanlage wird das Metallband gespült und unmittelbar im Anschluß einer chemischen Konversion unterzogen. Dies erfolgt in "No-Rinse"-Verfahren, wobei sich kapillaraktive Oberflächenbereiche auf dem Metallband ausbilden. Daran anschließend kann der Kleberauftrag, wobei dies vorzugssweise in allen drei Prozessen in einem Coilcoating-Verfahren durchgeführt wird.

Nach dem Auftrag des Klebers ist das Bandhalbzeug zur Versendung an die Automobilwerke bereit. Auch längere Lagerzeiten und grobe Transportarbeiten können mit diesem Halbzeug durchgeführt werden, da die Oberfläche kratzfest und gegen chemische Einflüsse geschützt ist.

Es kann nun entweder gleich eine Verformung mit anschließender Anbindung an eine Karosseriekomponente erfolgen oder alternativ zunächst die Verbindung mit der Karosseriekomponente und dann Verformung in einem gemeinsamen Umformprozeß stattfinden. Beim Tiefziehen wirkt die Kleberoberfläche im Sinne eines Schmierfilms und verbessert die Umformeigenschaften der Konvertierungsschicht, beispielsweise einer Chromatschicht unter tribologischen Gesichtspunkten.

Der sich daran anschließende Lackauftrag kann durch Steuerung der Leitfähigkeit in der Kleberschicht beeinflußt werden. Gleichzeitig hat dies Auswirkungen auf die Korrosionseigenschaften, da die Tauchlackierung auch in den kritischen Punkten des Karosserieverbundteiles einwirkt.

Beim nachfolgenden Einbrennprozeß ergeben sich erfindungsgemäß erhebliche Vorteile durch die Kombination des Einbrennens mit der Abtrocknung und Aushärtung des Klebers. Wahrend herkommlicherweise die Klebeschichten eine proportionale Zunahme der Steifigkeit bei ansteigenden Temperaturen zeigen, wird erfindungsgemäß ein Schmelzkleber ausgewählt, der innerhalb eines kurzen Erweichungsintervalls ab 180°C aushärtet. Dies ermöglicht die kombinierte Einbrenn-Aushärtebehandlung, so daß die Verfahrenszeiten erheblich verkürzt werden.

Figur 3 zeigt einen Querschnitt durch ein beidseitig beschichtetes Metallblech 12, bei dem sowohl Knoversionsschichten 13, 16 als auch Kleberschichten 14, 15, wie eingangs beschrieben im Coil-coating-Verfahren aufgetragen wurden. Diese Herstellungsverfahren des erfindungsgemäß aufgebauten Karosserieverbundkörpers hat den Vorteil, daß es aus vorbereiteten Halbzeugteilen vor Ort mit einem oder mehreren Karosserieanschlußteilen durchgeführt werder kann. Vor der Verbindung mit dem Karosserieanschlußteil muß dieses sorgfältig vorbehandelt werden. Es sind aber auch Lacksysteme bekannt, die beim Aufsprühen auf die Metalloberfläche eine Konversionsschicht ausbilden. Die zuletzt genannte Verfahrensweise ist allerdings nur für Reperaturarbeiten und für kleinere Metallflächen zugelassen.

Figur 4 zeigt eine mehrlagige Anordnung zweier Metallbleche 22, 27 die erfindungsgemäß über jewails eine Konversionsschicht 23, 26 sowie zwei Kleberschichten 24, 25 zu einem Karosserieverbundteil zusammengeschweißt sind. Das gesamte Verbundteil wird von einer Lackschicht 21a, 21b abgedeckt. Aus dieser Darstellung ist ersichtlich, daß die Lackschicht 21a, 21b auch an den kritischen Stellen nach einer Umformung keine Ablöseerscheinungen zeigt.

## Patentansprüche

1. Karosserieverbundteil, bestenhend aus einem Metallblech, einer Karosseriekomponente sowie einer aus einem Schmelzkleber bestehenden und an den Kontaktflächen zu der Karosseriekomponente und zu dem Metallblech hin verklebten oder verschweißten Kunststoffschicht,
dadurch gekennzeichnet,
daß zwischen dem Schmelzkleber und dem Metallblech eine Konversionsschicht angeordnet ist.

2. Karosserieverbundteil nach Anspruch 1,
dadurch gekennzeichnet, daß das Metallblech als Metallband ausgebildet ist.

3. Karosserieverbundteil nach einem der vorhergehenden Ansprüche,
dadurch gekennzeichnet,
daß das Metallband aus einer Aluminiumlegierung besteht.

4. Karosserieverbundteil nach einem der vorhergehenden Ansprüche,
dadurch gekennzeichnet, daß das Metallband aus einer Aluminiumlegierung vom Typ AlMgSi besteht.

5. Karosserieverbundteil nach einem der vorhergehenden Ansprüche, dadurch gekennzeichnet, daß die Karosseriekomponente aus einer Stahl-Aluminium-Mischbauweise aufgebaut ist.

6. Karosserieverbundteil nach einem der vorhergehenden Anprüche,
dadurch gekennzeichnet,
daß das Metallband eine Dicke von 0,2 bis 3 mm aufweist.

7. Karosserieverbundteil nach einem der vorhergehenden Ansprüche,
dadurch gekennzeichnet,
daß der Schmelzkleber in einer gleichmäßigen Dicke von 5 bis 80 µm mit einer Toleranzbreite von ± 20 % aufgetragen ist.

8. Karosserieverbundteil nach einem der vorhergehenden An
dadurch gekennzeichnet,
daß der Schmelzkleber Gleitmitteleigenschaften aufweis und die Umformung des Karosseriebleches unterstützt.

9. Karosserieverbundteil nach einer der vornergenencen Ansprüche,
dadurch gekennzeichnet,
daß die Konversionsschicht eine Dicke von 0,2 bis 2 c/m² aufweist.

10. Karosserieverbundteil nach einem der vorhergehenden Ansprüche,
dadurch gekennzeichnet,
daß zwischen Schmelzkleber und Konversionsschicht ein Primer ein- oder mehrschichtig aufgetragen ist.

11. Karosserieverbundteil nach einem der vorhergehenden Ansprüche,
dadurch gekennzeichnet,
daß die Kleberschicht aus einem Haftlack besteht.

12. Karosserieverbundteil nach einem der vorhergehenden Ansprüche,
dadurch gekennzeichnet,
daß der Schmelzkleber Korossionsschutzeigenschaften aufweist.

13. Karosserieverbundteil nach einem der vorhergehenden Ansprüche,
dadurch gekennzeichnet,
daß der Schmelzkleber elektrisch leitfähige Bestandteile zur Stauerung der Leitfähigkeit enthält.

14. Karosserieverbundteil nach einem der vorhergehenden Ansprüche,
dadurch gekennzeichnet,
daß der Verbund mit einem Umformgrad zwischen 5 bis 25 % durch Tiefziehen, Streckziehen 0.2. Umformverfahren sphärisch verformt sind.

15. Karosserieverbundteil nach einem der vorhergehenden Ansprüche,
dadurch gekennzeichnet,
daß das Metallband und die Karosseriekomponente zusätzlich durch Schmelzschweißen oder mechanisches Fügen fixiert sind.

16. Karosserieverbundteil nach einem der vorhergehenden Ansprüche,
dadurch gekennzeichnet,
daß die Fixierung über Durchsetzfügen erfolgt.

17. Karosserieverbundteil nach einem der vorhergehenden Ansprüche,
dadurch gekennzeichnet,
daß die Karosseriekomponente aus einem weiteren Metallblech besteht, das mit einem Schmelzkleber beschichtet ist und zwischen der Schmelzkleberschicht und der Metalloberfläche eine Konversionsschicht aufweist.

18. Karossarieverbundteil nach einem der vorhergehenden. Ansprüche,
dadurch gekennzeichnet,
daß das Verbundteil mit einem Lack überzogen ist.

19. Karosserieverbundteil nach einem der vorhergehenden Ansprüche,
dadurch gekennzeichnet,
daß der Lack aus einem Einbrennlack besteht.

20. Karosserieverbundteil nach einem der vorhergehenden Ansprüche,
dadurch gekennzeichnet,
daß der Schmelzkleber so ausgewählt wird, daß er bei der Einbrenntemperatur aushärtet.

21. Verfahren zur Herstellung von sphärisch geformten Karosserieverbundteilen, wobei ein Metallband mit einer Karosseriekomponente verklebt, verformt und danach lackiert wird,
dadurch gekennzeichnet,
daß das Metallband im Coilcoating-Verfahren mit einer chemischen Konversionsschicht versehen und unmittelbar danach mit einem Schmelzkleber beschichtet wird, das beschichtete Metallband nach der Verformung mit der Karosseriekomponente verbunden und einer Tauchlackierung unterzogen wird.

22. Verfahren zur Herstellung von sphärisch geformten Karosserieverbundteilen nach einem der vorhergehenden verfahrensansprüche,
dadurch gekennzeichnet,
daß als Tauchlackierung die kathodische Tauchlackierung mit anschließender Einbrennstufe bei Temperaturen von ca. 180°C eingesetzt wird.

23. Verfahren zur Herstellung von sphärisch geformten Karosserieverbundteilen nach einem der vorhergehenden verfahrensansprüche,
dadurch gekennzeichnet,
daß für die Herstellung des Metallbandes eine aushärtbare Legierung verwender wird und die metallurgische Aushärtung währand des Einbrennprozesses bei Temperaturen zwischen 160 °C und 240 °C vorgenommen wird

24. Verfahren zur Herstellung von sphärisch geformten Karosserieverbundteilen nach einem der vorhergehenden verfahrensansprüche,
dadurch gekennzeichnet,
daß die Lackierung aus einem Füller, aus einem Basislack und einem Klarlack besteht und die Einbrenntemperaturen zwischen 180 und 120 °C nach der Beschichtung mit abfallender Temperatur durchlaufen werden.

25. Verfahren zur Herstellung von sphärisch geformten Karosserieverbundteilen nach einem der vorhergehenden verfahrensansprüche,
dadurch gekennzeichnet,
daß der Schmelzkleber während der KTL-Behandlung sich chemisch inert verhält.

26. Verfahren zur Herstellung von sphärisch geformten Karosserieverbundteilen nach einem der vorhergehenden verfahrensansprüche,
dadurch gekennzeichnet,
daß der Schmelzkleber auswaschbeständig ist.

27. Verfahren zur Herstellung von sphärisch geformten Karosserieverbundteilen nach einem der vorhergehenden verfahrensansprüche,
dadurch gekennzeichnet,
daß die chemische Konversionsschicht im NO-RINSE-Verfahren hergestellt wird.

28. Verfahren zur Herstallung von sphärisch geformten Karosserieverbundteilen nach einem der vorhergehenden verfahrensansprüche,
dadurch gekennzeichnet,
daß zwischen der Vorbehandlung und der Herstellung der Konversionsschicht ein Zeitraum von max. 10 Sek. liegt.

29. Verfahren zur Herstellung von sphärisch geformten Karosserieverbundteilen nach einem der vorhergehenden verfahrensansprüche,
dadurch gekennzeichnet,
daß zwischen der Herstellung der Konversionsschicht und dem Auftrag des Schmelzklebers ein Zeitraum von max. 15 Sek. liegt.

30. Verfahren zur Herstellung von sphärisch geformten Karosserieverbundteilen nach einem der vorhergehenden verfahrensansprüche,
dadurch gekennzeichnet,
daß die Dickenabweichung innerhalb der Konversionsschicht max. 5 % beträgt.

31. Verfahren zur Herstellung von sphärisch geformten Karosserieverbundteilen nach einem der vorhergehenden verfahrensansprüche,
dadurch gekennzeichnet,
daß die Dickenabweichung in der Schicht des Schmelzklebers max. 15 % beträgt.

## Claims

1. Composite car body part, comprising a metal sheet, a car body component and a plastics layer which comprises a hot-melt adhesive and which is adhesively bonded or heat-sealed at the contact faces towards the car body component and towards the metal sheet,
characterised in that
a conversion layer is arranged between the hot-melt adhesive and the metal sheet.

2. Composite car body part according to claim 1,
characterised in that the metal sheet is in the form of a metal strip.

3. Composite car body part according to either of the preceding claims,
characterised in that
the metal strip comprises an aluminium alloy.

4. Composite car body part according to any one of the preceding claims,
characterised in that the metal strip comprises an aluminium alloy of the type AlMgSi.

5. Composite car body part according to any one of the preceding claims, characterised in that the car body component has a steel/aluminium composite construction.

6. Composite car body part according to any one of the preceding claims,
characterised in that
the metal strip has a thickness of from 0.2 to 3 mm.

7. Composite car body part according to any one of the preceding claims,
characterised in that
the hot-melt adhesive is applied at a uniform thickness of from 5 to 80 µm with a tolerance range of ± 20%.

8. Composite car body part according to any one of the preceding claims,
characterised in that
the hot-melt adhesive has lubricating properties and aids the deformation of the car body sheet.

9. Composite car body part according to any one of the preceding claims,
characterised in that
the conversion layer has a thickness of from 0.2 to 2 g/m².

10. Composite car body part according to any one of the preceding claims,
characterised in that
one or more coats of a primer is/are applied between the hot-melt adhesive and the conversion layer.

11. Composite car body part according to any one of the preceding claims,
characterized in that
the layer of adhesive comprises an adhesive lacquer.

12. Composite car body part according to any one of the preceding claims,
characterized in that
the hot-melt adhesive has anti-corrosion properties.

13. Composite car body part according to any one of the preceding claims,
characterized in that
the hot-melt adhesive contains electrically conductive constituents for controlling the conductivity.

14. Composite car body part according to any one of the preceding claims,
characterized in that
the composite assembly is shaped spherically to a degree of deformation of from 5 to 25% by deep-drawing, stretch-forming or similar deformation methods.

15. Composite car body part according to any one of the preceding claims,
characterized in that
the metal strip and the car body component are additionally secured by fusion welding or mechanical connection.

16. Composite car body part according to any one of the preceding claims,
characterised in that
the securing is effected by means of a process of connecting while deforming.

17. Composite car body part according to any one of the preceding claims,
characterized in that
the car body component comprises a further metal sheet which is coated with a hot-melt adhesive and which has a conversion layer between the hot-melt adhesive layer and the surface of the metal.

18. Composite car body part according to any one of the preceding claims,
characterised in that
the composite part is coated with a lacquer.

19. Composite car body part according to any one of the preceding claims,
characterized in that
the lacquer comprises a stoving lacquer.

20. Composite car body part according to any one of the preceding claims,
characterised in that
the hot-melt adhesive is selected so that it hardens at the stoving temperature.

21. Process for manufacturing spherically shaped composite car body parts in which a metal strip is adhesively bonded to a car body component, deformed and subsequently lacquered,
characterised in that
the metal strip is provided with a chemical conversion layer using the coil coating method and, immediately afterwards, is coated with a hot-melt adhesive,
the coated metal strip is connected to the car body component after the deformation process and undergoes an immersion coating process.

22. Process for manufacturing spherically shaped composite car body parts according to any one of the preceding process claims,
characterized in that
the cathodic immersion coating process with a subsequent stoving stage at temperatures of approximately 180°C is used as the immersion coating process.

23. Process for manufacturing spherically shaped composite car body parts according to either of the preceding process claims,
characterized in that
a hardenable alloy is used for manufacturing the metal strip and the metallurgical hardening is effected during the stoving process at temperatures of between 160°C and 240°C.

24. Process for manufacturing spherically shaped composite car body parts according to any one of the preceding process claims,
characterized in that
the lacquer comprises a filler, a base lacquer and a clear lacquer and the process runs through the stoving temperatures of between 180 and 120°C from the highest to the lowest after the coating process.

25. Process for manufacturing spherically shaped composite car body parts according to any one of the preceding process claims,
characterized in that
the hot-melt adhesive behaves in a chemically inert manner during the cathodic immersion coating treatment.

26. Process for manufacturing spherically shaped composite car body parts according to any one of the preceding process claims,
characterised in that
the hot-melt adhesive is resistant to being washed out.

27. Process for manufacturing spherically shaped composite car body parts according to any one of the preceding process claims,
characterized in that
the chemical conversion layer is produced using the NO-RINSE method.

28. Process for manufacturing spherically shaped composite car body parts according to any one of the preceding process claims,
characterized in that
a time of a maximum of 10 seconds separates the pretreatment and the production of the conversion layer.

29. Process for manufacturing spherically shaped composite car body parts according to any one of the preceding process claims,
characterized in that
a time of a maximum of 15 seconds separates the production of the conversion layer and the application of the hot-melt adhesive.

30. Process for manufacturing spherically shaped composite car body parts according to any one of the preceding process claims,
characterized in that
the variation in thickness within the conversion layer is a maximum of 5%.

31. Process for manufacturing spherically shaped composite car body parts according to any one of the preceding process claims,
characterized in that
the variation in thickness of the layer of hot-melt adhesive is a maximum of 15%.

## Revendications

1. Pièce composite de carrosserie, constituée d'une tôle métallique, d'un élément de carrosserie et d'une couche de matière synthétique constituée d'une code fusible et collée ou soudée sur les faces de contact vers l'élément de carrosserie et vers la tôle métallique,
caractérisée en ce qu'une couche de conversion est disposée entre la code fusible et la tôle métallique.

2. Pièce composite de carrosserie selon la revendication 1, caractérisée en ce que la tôle métallique est réalisée sous la forme d'une bande de métal.

3. Pièce composite de carrosserie selon une des revendications précédentes, **caracterisée** en ce que la bande de métal est constituée d'un alliage d'aluminium.

4. Pièce composite de carrosserie selon une des revendications précédentes**, caractérisée** en ce que la bande de métal est constituée d'un alliage d'aluminium du type AlMgSi.

5. Pièce composite de carrosserie selon une des revendications précédentes, **caractérisée** en ce que l'élément de carrosserie est une construction mixte acier-aluminium.

6. Pièce composite de carrosserie selon une des revendications précédentes, **caractérisée** en ce que la bande de métal présente une épaisseur de 0,2 à 3 mm.

7. Pièce composite de carrosserie selon une des revendications précédentes, **caractérisée** en ce que la colle fusible est appliquée en une épaisseur uniforme de 5 à 80 µm, avec une tolérance de ± 20 %.

8. Pièce composite de carrosserie selon une des revendications précédentes, **caractérisée** en ce que la code fusible présente des propriétés d'agent antifriction et favorise la déformation de la tôle de carrosserie.

9. Pièce composite de carrosserie selon une des revendications précédentes, **caractérisée** en ce que la couche de conversion présente une épaisseur de 0,2 à 2 g/m².

10. Pièce composite de carrosserie selon une des revendications précédentes, **caractérisée** en ce qu'un apprêt monocouche ou multicouche est appliqué entre la code fusible et la couche de conversion.

11. Pièce composite de carrosserie selon une des revendications précédentes, **caractérisée** en ce que la couche de code est constituée d'une peinture adhésive.

12. Pièce composite de carrosserie selon une des revendications précédentes, **caractérisée** en ce que la colle fusible présente des propriétés de protection contre la corrosion.

13. Pièce composite de carrosserie selon une des revendications précédentes, **caractérisée** en ce que la colle fusible contient des composants électriquement conducteurs afin de régler la conductivité.

14. Pièce composite de carrosserie selon une des revendications précédentes, **caracterisée** en ce que le composite est déformé sous une forme sphérique, avec un degré de déformation compris entre 5 et 25 %, par emboutissage, étirage ou autre procédé de déformation.

15. Pièce composite de carrosserie selon une des revendications précédentes, **caractérisée** en ce que la bande de métal et l'élément de carrosserie sont en outre fixés en position par soudage par fusion ou jointoiement mécanique.

16. Pièce composite de carrosserie selon une des revendications précédentes**, caractérisée** en ce que la fixation s'effectue par jointoiement entrelacé.

17. Pièce composite de carrosserie selon une des revendications précédentes, **caractérisée** en ce que l'élément de carrosserie consiste en une autre tôle métallique qui est enduite d'une couche de code fusible et présente une couche de conversion entre la couche de code fusible et la surface du métal.

18. Pièce composite de carrosserie selon une des revendications précédentes, **caractérisée** en ce que la pièce composite est revêtue d'un vernis.

19. Pièce composite de carrosserie selon une des revendications précédentes, **caractérisée** en ce que le vernis est un vernis à cuire.

20. Pièce composite de carrosserie selon une des revendications précédentes, **caractérisée** en ce que la colle fusible est choisie de telle sorte qu'elle durcit à la température de cuisson.

21. Procédé de fabrication de pièces composites de carrosserie de forme sphérique, une bande de métal étant assemblée par collage à un élément de carrosserie, déformée puis vernie, **caractérisé** en ce que la bande de métal est pourvue d'une couche de conversion chimique par couchage sur bande, et enduite juste après d'une couche de colle fusible, et la bande de métal enduite est, après la déformation, assemblée à l'élément de carrosserie et soumise à un vernissage par immersion.

22. Procédé de fabrication de pièces composites de carrosserie de forme sphérique selon une des revendications de procédé précédentes, **caractérisé** en ce qu'on utilise comme vernissage par immersion un vernissage par électrodéposition cathodique, suivi d'une étape de cuisson à des températures d'environ 180°C.

23. Procédé de fabrication de pièces composites de carrosserie de forme sphérique selon une des revendications de procédé précédentes, **caractérisé** en ce qu'on utilise pour la fabrication de la bande de métal un alliage durcissable, et le durcissement métallurgique est entrepris pendant le processus de cuisson à des températures comprises entre 160°C et 240°C.

24. Procédé de fabrication de pièces composites de carrosserie de forme sphérique selon une des revendications de procédé précédentes, **caractérisé** en ce que le vernissage comprend un apprêt garnissant, un vernis de base et un vernis transparent, et les températures de cuisson à la suite de l'enduction vont en diminuant de 180 à 120°C.

25. Procédé de fabrication de pièces composites de carrosserie de forme sphérique selon une des revendications de procédé précédentes, **caractérisé** en ce que la colle fusible a un comportement chimique inerte pendant le vernissage par électrodéposition cathodique.

26. Procédé de fabrication de pièces composites de carrosserie de forme sphérique selon une des revendications de procédé précédentes, **caractérisé** en ce que la colle fusible est résistante au lavage.

27. Procédé de fabrication de pièces composites de carrosserie de forme sphérique selon une des revendications de procédé précédentes, **caractérisé** en ce que la couche de conversion chimique est réalisée par le procédé 〈〈 no rinse 〉〉.

28. Procédé de fabrication de pièces composites de carrosserie de forme sphérique selon une des revendications de procédé précédentes, **caractérisé** en ce qu'un intervalle de temps d'au plus 10 secondes se déroule entre le traitement préalable et la réalisation de la couche de conversion.

29. Procédé de fabrication de pièces composites de carrosserie de forme sphérique selon une des revendications de procédé précédentes, **caractérisé** en ce qu'un intervalle de temps d'au plus 15 secondes se déroule entre la réalisation de la couche de conversion et l'application de la colle fusible.

30. Procédé de fabrication de pièces composites de carrosserie de forme sphérique selon une des revendications de procédé précédentes, **caractérisé** en ce que l'écart d'épaisseur dans la couche de conversion est au plus de 5%.

31. Procédé de fabrication de pièces composites de carrosserie de forme sphérique selon une des revendications de procédé précédentes, **caractérisé** en ce que l'écart d'épaisseur dans la couche de colle fusible est au plus de 15 %.
